# EUROPÄISCHE PATENTANMELDUNG

(11) **EP 1 609 622 A2**
(43) Veröffentlichungstag der Anmeldung: **28.12.2005**
(21) Anmeldenummer: 05011044.4
(22) Anmeldetag: 21.05.2005
(51) Int. Cl.: B44C 5/04, B44C 3/02

(54) **Dekorelement**

(30) Priorität: 22.06.2004 DE 202004009818 U
(71) Anmelder: Ehrlinger, Rosmarie, 32105 Bad Salzuflen (DE); Ehrlinger, Ulrich, 32105 Bad Salzuflen (DE)
(72) Erfinder: Ehrlinger, Rosmarie, 32105 Bad Salzuflen (DE)
(74) Vertreter: Pott, Ulrich

(57) **Zusammenfassung**

Die Erfindung betrifft ein Dekorelement, insbesondere als Möbel-, Verkleidungsteil oder dgl. ausgebildetes Dekorplattenelement mit einem von einer transparenten Folie bedeckbaren Dekor, wobei oberhalb der Folie eine Deckschicht aus einem mineralischen Glasmaterial vorgesehen ist.

## Beschreibung

Die Erfindung bezieht sich auf ein Dekorelement, insbesondere auf ein als Möbel-, Verkleidungsteil oder dgl. ausgebildetes Dekorplattenelement, mit einem von einer transparenten Folie bedeckbaren Dekor.

Dekorelemente der vorgenannten Art sind in vielfältiger Ausbildung bekannt. So sind Türen für Schrank- oder Küchenmöbel bekannt, die auf einer Trägerplatte aufgebrachte Dekorpapiere, Dekorfolien oder sonstige Dekore aufweisen, die oberseitig mit einer transparenten Folie belegt sind.

Solche Dekorelemente, die vielfach auch z.B. als Decken- oder Wandverkleidungen benutzt werden, haben ein optisch ansprechendes Aussehen. Gleichwohl haftet ihn vielfach der Nachteil an, daß insbesondere bei Verwendung solcher Elemente an Standorten, die besonderen Temperatur- und/oder Feuchtigkeitseinflüssen ausgesetzt sind, Folienbereiche und damit auch darunter befindliche Dekore Schaden nehmen, was zu einem unansehnlichen Gesamteindruck führt. Darüber hinaus neigen solche transparenten Folien auch dazu, bei äußeren Einflüssen zu verblassen, womit ebenfalls ein außerordentlich beeinträchtigter optischer Gesamteindruck einhergeht.

Es ist Aufgabe der vorliegenden Erfindung, ein Dekorelement der eingangs genannten Art zur Verführung zu stellen, das einen angenehmen ästhetischen Gesamteindruck vermittelt und diesen auch beibehält, wenn das Dekorelement an Standorten eingesetzt werden soll, an denen es kritischen Temperatur- und/oder Feuchtigkeitseinflüssen ausgesetzt ist. Auch soll die mechanische Belastbarkeit dieses Dekorelements verbessert sein.

Zur Lösung dieser Aufgabe zeichnet sich das Dekorelement der eingangs genannten Art dadurch aus, daß oberhalb der Folie eine Deckschicht aus einem mineralischen Glasmaterial vorgesehen ist.

Damit ist ein Dekorelement geschaffen, das eine äußerst belastbare Außendeckschicht aufweist, die sowohl das Dekor als auch die Folie mit einschließen kann. Eine solche mineralischen Glasdeckschicht kann einen innigen Verbund mit der Folie und damit mit dem darunter befindlichen Dekor einnehmen. Das Dekor und die Folie sind sicher vor äußeren Einflüssen, insbesondere auch äußeren Temperatur- und Feuchtigkeitseinflüssen, zu schützen.

Das Dekorelement nach der Erfindung ist daher in hohem Maße geeignet, auch ein wertvolles Holzfurnierelement als Dekor, welches beispielsweise auch mit Intarsien versehen sein kann, zu verwenden und dieses über die transparente Folie und die mechanisch belastbare Glasschicht sichtbar zu machen. Damit ist das Dekorelement nicht nur geeignet, z.B. in Schrankmöbeln, z.B. als Schranktür oder Küchenmöbeltür, Verwendung zu finden, sondern darüber hinaus auch z.B. in Räumen als Dekken- oder Wandverkleidungselement. Den gestalterischen Möglichkeiten sind dabei keinerlei Grenzen gesetzt. Insbesondere ist es auch möglich, z.B. das Dekorelement in Sandwichbauweise derart zu gestalten, daß ein mittleres Dekor, beispielsweise ein mittleres Holzfurnierelement beidseitig von der Folie belegt und auch beidseitig von der Glasdeckschicht umschlossen wird. Dabei können auch Bereiche innerhalb des Dekors ausgespart sein, um mit Ausleuchtung oder Tageslicht besondere optische Effekte zu erzielen. Um insbesondere auch sehr edle Echtholzfurnierelemente vorzusehen, sind besondere Maßnahmen für die Erstellung des Dekorelementes notwendig. So ist beispielsweise dafür Sorge zu tragen, daß ein Echtholzfurnierelement nicht in Randbereichen reißt, was sehr leicht geschehen kann, wenn die Deckschicht aus dem mineralischen Glasmaterial aufgebracht wird und dabei gewalzt und/oder gepreßt wird. Durch insbesondere das Walzen des Glasmaterials wird ein inniger Verbund zwischen der Deckschicht und der Folie sowie dem Dekor hergestellt, wobei z.B. Luft herausgetragen wird und Freiräume in z.B. der Holzstruktur ausgefüllt werden.

Dazu kann in Eckbereichen oder auch in Seitenbereichen zuvor ein transparenter Klebestreifen auf das Echtholzfurnierelement aufgebracht werden, der einen Brechungsindex aufweist, der der Folie bzw. dem Glasmaterial angeglichen ist. Dadurch ist dieser im fertigen Zustand der Dekorelementes nicht zu sehen. Zusätzlich oder alternativ können auch abgerundete Ecken vorgesehen sein oder aber eine insgesamt leicht gewölbte Querschnittsstruktur um die Druckeinflüsse während des Aufbringens der Deckschicht berücksichtigt zu haben.

Als Folie wird bevorzugterweise eine PVB-Polyvinylbutinol-Folie verwendet und zwar in einer Folienstärke im Bereich zwischen 0,3 mm bis 1 mm, bevorzugtermaßen 0,7 mm bis 0,8 mm. Die Glasscheibe hat bevorzugterweise eine Dicke von 2 mm bis 5 mm, bevorzugt 3 mm. Ein als Dekor verwendetes Echtholzfurnier kann z.B. eine Stärke von 0,3 mm haben. In Kantenbereichen kann darüber hinaus mit einer Kopfverleimung gearbeitet werden, um saubere Übergänge vorliegen zu haben.

Insgesamt ist damit ein Dekorelement geschaffen, daß großen mechanischen Einflüssen genügt, gleichwohl langlebig auch wertvollste Dekore sichtbar macht, wodurch sich vielfältigste Anwendungsmöglichkeiten in auch hochwertigen Möbel- und Gestaltungsbereichen erschließen.

## Patentansprüche

1. Dekorelement, insbesondere als Möbel-, Verkleidungsteil oder dgl. ausgebildetes Dekorplattenelement mit einem von einer transparenten Folie bedeckbaren Dekor, **dadurch gekennzeichnet, daß** oberhalb der Folie eine Deckschicht aus einem mineralischen Glasmaterial vorgesehen ist.

2. Dekorelement nach Anspruch 1, **dadurch gekennzeichnet, daß** als Dekor ein Holzfurnierelement vorgesehen ist.

3. Dekorelement nach Anspruch 2, **dadurch gekennzeichnet, daß** das Holzfurnierelement mit Intarsien versehen ist.

4. Dekorelement nach einem der Ansprüche 1 bis 3, **dadurch gekennzeichnet, daß** in Eckbereichen abgerundete Ecken vorgesehen sind.

5. Dekorelement nach einem der Ansprüche 1 bis 4, **dadurch gekennzeichnet, daß** das Dekorelement einen leicht gewölbten Querschnitt aufweist.

6. Dekorelement nach einem der Ansprüche 1 bis 5, **dadurch gekennzeichnet, daß** als Deckschicht ein auf die Folie gewalztes und/oder gepreßtes mineralisches Glasmaterial vorgesehen ist.

7. Dekorelement nach einem der Ansprüche 2 bis 6, **dadurch gekennzeichnet, daß** das Holzfurnierelement in Seitenkantenbereichen mit einem transparenten Klebestreifen versehen ist.

8. Dekorelement nach Anspruch 7, **dadurch gekennzeichnet, daß** der Klebestreifen einen mit dem Brechungsindex der Folie und der Deckschicht übereinstimmenden Brechungsindex hat.

9. Dekorelement nach einem der Ansprüche 1 bis 8, **dadurch gekennzeichnet, daß** die Deckschicht eine Dicke von 2 mm bis 5 mm aufweist.

10. Dekorelement nach einem der Ansprüche 1 bis 9, **dadurch gekennzeichnet, daß** die Folie eine Dicke von 0,3 bis 1 mm hat.

11. Dekorelement nach einem der Ansprüche 1 bis 10, das plattenmäßig ausgebildet ist, **dadurch gekennzeichnet, daß** in Kantenbereichen eine Kopfverleimung für das Dekor vorgesehen ist.

12. Dekorelement nach einem der Ansprüche 1 bis 11, **dadurch gekennzeichnet, daß** das Dekorelement in Sandwichbauweise zweiseitig mit der Folie und der Deckschicht sowie einem mittleren, von zwei Seiten sichtbaren eingeschlossenen Dekor versehen ist.

13. Dekorelement nach einem der Ansprüche 1 bis 11, **dadurch gekennzeichnet, daß** das Dekor auf eine Trägerschicht aufgebracht ist.

14. Dekorelement nach Anspruch 11 oder 12, **dadurch gekennzeichnet, daß** das Holzfurnierelement und die Folie Verankerungsdurchlässe für einander zugeordnete Deckschichten oder die Deckschicht und die Trägerschicht aufweisen.
